(19) **Europäisches Patentamt / European Patent Office / Office européen des brevets**

(11) **EP 4 775 370 A1**

(12) **EUROPEAN PATENT APPLICATION**
published in accordance with Art. 153(4) EPC

(43) Date of publication:
**15.07.2026 Bulletin 2026/29**

(21) Application number: **24862583.2**

(22) Date of filing: **21.08.2024**

(51) International Patent Classification (IPC):
**B29B 17/00** (2006.01)

(52) Cooperative Patent Classification (CPC):
**B29B 17/00;** Y02W 30/62

(86) International application number:
**PCT/JP2024/029719**

(87) International publication number:
**WO 2025/052929 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.09.2023 JP 2023143879**

(71) Applicant: **Nitto Denko Corporation
Ibaraki-shi, Osaka 567-8680 (JP)**

(72) Inventors:
• **KOTANI, Chihiro**
  **Ibaraki-shi, Osaka 567-8680 (JP)**
• **NOMURA, Takayuki**
  **Ibaraki-shi, Osaka 567-8680 (JP)**
• **YAMADA, Yosuke**
  **Ibaraki-shi, Osaka 567-8680 (JP)**
• **YAMAMOTO, Akiyoshi**
  **Ibaraki-shi, Osaka 567-8680 (JP)**

(74) Representative: **Hoffmann Eitle
Patent- und Rechtsanwälte PartmbB
Arabellastraße 30
81925 München (DE)**

(54) **METHOD FOR SEPARATING ADHESIVE AND BASE MATERIAL**

(57)     Provided is a method for easily sorting, from a mixture including a pressure-sensitive adhesive and a substrate, the pressure-sensitive adhesive and the substrate.

The method according to the embodiment of the present invention for sorting a pressure-sensitive adhesive and a substrate is a method for sorting, from a mixture (A) including a pressure-sensitive adhesive, a substrate, and a first organic solvent, the pressure-sensitive adhesive and the substrate, and at least one operation selected from the group consisting of (i), (ii), and (iii) below is performed: (i) an operation of stirring the mixture (A) in a saturated aqueous solution of the first organic solvent; (ii) an operation of stirring the mixture (A) in a water-containing liquid mixture containing at least one selected from the group consisting of a second organic solvent and a third organic solvent in an amount exceeding a saturation solubility thereof; and (iii) an operation of, after immersion of the mixture (A) in the third organic solvent, recovering a mixture (B) obtained by the immersion and stirring the mixture (B) in water.

EP 4 775 370 A1

**Description**

TECHNICAL FIELD

The present invention relates to a method for sorting a pressure-sensitive adhesive and a substrate.

BACKGROUND ART

A large quantity of pressure-sensitive adhesive tape is used for putting labels or the like on articles and wrapping materials, for packing with packing materials, in manufacturing process of electrical parts or optical parts, for masking, etc. An amount of pressure-sensitive adhesive tape used in manufacturing process of electrical parts or optical parts has been increasing particularly in recent years, a large amount of waste of pressure-sensitive adhesive tape is produced at, for example, manufacturing sites.

Waste of pressure-sensitive adhesive tape is commonly burned and disposed or brought to waste disposal facilities and disposed. However, such disposal is not preferred from the viewpoint of environmental load reduction and resource circulation.

In view of the above circumstances, it is necessary to reduce such disposal of waste of pressure-sensitive adhesive tape as much as possible and reuse resources. Recycling of pressure-sensitive adhesive tape materials is one possible means of reducing disposal of pressure-sensitive adhesive tape. Establishment of a technology of recycling pressure-sensitive adhesive tape materials is conducive to, for example, reduction of $CO_2$ emissions from fossil resource extraction, and can also be very effective in terms of solving the climate change problem.

Pressure-sensitive adhesive materials are typically pressure-sensitive adhesives and substrates. A pressure-sensitive adhesive tape is obtained by producing a pressure-sensitive adhesive on a substrate typically by dissolving a polymer (which may be referred to as a base polymer) and an additive, such as a crosslinking agent, suitable for the purpose in a solvent to give a pressure-sensitive adhesive composition, applying the pressure-sensitive adhesive composition to the substrate, performing heating, drying, or the like as necessary, and allowing a crosslinking reaction to progress (e.g., Patent Literature 1).

CITATION LIST

Patent Literature

Patent Literature 1: JP 2021-175796 A

SUMMARY OF INVENTION

Technical Problem

An object of the present invention is to provide a method for easily sorting, from a mixture including a pressure-sensitive adhesive and a substrate, the pressure-sensitive adhesive and the substrate.

Solution to Problem

[1] A method according to an embodiment of the present invention for sorting a pressure-sensitive adhesive and a substrate is a method for sorting, from a mixture (A) including a pressure-sensitive adhesive, a substrate, and a first organic solvent, the pressure-sensitive adhesive and the substrate, wherein
at least one operation selected from the group consisting of (i), (ii), and (iii) below is performed:

(i) an operation of stirring the mixture (A) in a saturated aqueous solution of the first organic solvent;
(ii) an operation of stirring the mixture (A) in a water-containing liquid mixture containing at least one selected from the group consisting of a second organic solvent and a third organic solvent in an amount exceeding a saturation solubility thereof; and
(iii) an operation of, after immersion of the mixture (A) in the third organic solvent, recovering a mixture (B) obtained by the immersion and stirring the mixture (B) in water.

[2] In the sorting method according to [1], the first organic solvent may be an organic solvent having an HSP value of 10 to 45.

[3] In the sorting method according to [1] or [2], the second organic solvent may be an organic solvent having an HSP value of 10 to 45 and a solubility in water of more than 10 g/L and 500 g/L or less at 20°C.

[4] In the sorting method according to any one of [1] to [3], the third organic solvent may be an organic solvent having an HSP value of 10 to 45 and a solubility in water of 10 g/L or less at 20°C.

[5] In the sorting method according to any one of [1] to [4], the stirring may be followed by standing.

[6] In the sorting method according to any one of [1] to [5], the pressure-sensitive adhesive may be a pressure-sensitive adhesive included in a pressure-sensitive adhesive tape.

[7] In the sorting method according to any one of [1] to [6], the substrate may be a substrate included in a pressure-sensitive adhesive tape.

Advantageous Effects of Invention

The present invention can provide a method for easily sorting, from a mixture including a pressure-sensitive adhesive and a substrate, the pressure-sensitive adhesive and the substrate.

DESCRIPTION OF EMBODIMENTS

The term "weight" herein may be interpreted as "mass" which is commonly used as an SI unit for weight.

The term "specific gravity" is used herein in its commonly accepted sense, and refers to a specific gravity relative to water taken as 1.

The method according to an embodiment of the present invention for sorting a pressure-sensitive adhesive and a substrate is a method for sorting, from a mixture (A) including a pressure-sensitive adhesive, a substrate, and a first organic solvent, the pressure-sensitive adhesive and the substrate.

An appropriate pressure-sensitive adhesive can be adopted as the pressure-sensitive adhesive unless the effect of the present invention is impaired. The pressure-sensitive adhesive may be composed of only one pressure-sensitive adhesive, or may be composed of two or more pressure-sensitive adhesives. The pressure-sensitive adhesive is typically an acrylic pressure-sensitive adhesive.

An appropriate acrylic pressure-sensitive adhesive can be adopted as the acrylic pressure-sensitive adhesive unless the effect of the present invention is impaired. The acrylic pressure-sensitive adhesive is typically an acrylic pressure-sensitive adhesive as waste (sometimes referred to as "wasted acrylic pressure-sensitive adhesive"). Examples of the wasted acrylic pressure-sensitive adhesive include an acrylic pressure-sensitive adhesive included in an acrylic pressure-sensitive adhesive tape recovered after use, a mixture including an acrylic pressure-sensitive adhesive obtained by subjecting an acrylic pressure-sensitive adhesive tape recovered after use to an appropriate treatment, an acrylic pressure-sensitive adhesive residue left on an adherend after peeling an acrylic pressure-sensitive adhesive tape from the adherend, and an acrylic pressure-sensitive adhesive adhered to acrylic pressure-sensitive adhesive production equipment.

An appropriate substrate can be adopted as the substrate unless the effect of the present invention is impaired. The substrate may be composed of only one substrate, or may be composed of two or more substrates. The substrate is typically a substrate included in a pressure-sensitive adhesive tape.

An appropriate substrate can be adopted as the substrate unless the effect of the present invention is impaired. The substrate is typically a substrate as waste (sometimes referred to as "wasted substrate"). Examples of the waste substrate include a substrate included in a pressure-sensitive adhesive tape recovered after use and a mixture including a substrate obtained by subjecting a pressure-sensitive adhesive tape recovered after use to an appropriate treatment.

An appropriate material can be adopted as a material of the substrate unless the effect of the present invention is impaired. The material of the substrate is typically a resin material.

Examples of the resin material as the material of the substrate include polyimide (PI), polyetheretherketone (PEEK), polyethylene terephthalate (PET), polyethylene naphthalate (PEN), polybutylene terephthalate (PBT), acrylic resins such as polymethyl methacrylate (PMMA), polycarbonate, triacetyl cellulose (TAC), polysulfone, polyarylate, polyethylene (PE), polypropylene (PP), an ethylene-propylene copolymer, an ethylenevinyl acetate copolymer (EVA), a polyamide (nylon), a fully aromatic polyamide (aramid), polyvinyl chloride (PVC), polyvinyl acetate, polyphenylene sulfide (PPS), fluorine resin, and a cyclic olefin polymer.

Incidentally, pressure-sensitive adhesive tape can be used in manufacturing electrical parts and optical parts. During such manufacturing, a pressure-sensitive adhesive residue can be left on an adherend. Such an adherend can also be treated as a substrate in the method according to the embodiment of the present invention for sorting a pressure-sensitive adhesive and a substrate. Any appropriate adherend used as an adherend in manufacturing as described above can be treated as the substrate. Examples of such an adherend include silicon wafers, ceramic semiconductors, and glass.

An appropriate organic solvent can be adopted as the first organic solvent unless the effect of the present invention is impaired. The first organic solvent may be composed of only one first organic solvent, or may be composed of two or more first organic solvents. The first organic solvent is typically an organic solvent having an HSP value of 10 to 45, and the HSP thereof is preferably 15 to 40, more preferably 15 to 35, even more preferably 15 to 30, particularly preferably 15 to 25.

Examples of the organic solvent having an HSP value of 10 to 45 include an alcohol having an HSP value of 10 to 45, a hydrocarbon having an HSP value of 10 to 45, a ketone having an HSP value of 10 to 45, an ester having an HSP value of 10 to 45, an ether having an HSP value of 10 to 45, an amine having an HSP value of 10 to 45, a nitrile having an HSP value of 10 to 45, a carboxylic acid having an HSP value of 10 to 45, a terpene having an HSP value of 10 to 45, a nitro compound having an HSP value of 10 to 45, and a halogen compound having an HSP value of 10 to 45.

Examples of the alcohol having an HSP of 10 to 45 include methanol (HSP value = 29.4), ethanol (HSP value = 26.5), 1-propanol (HSP value = 24.6), 2-propanol (IPA) (HSP value = 23.6), 1-butanol (HSP value = 23.2), 1-pentanol (HSP value = 21.7), 1-hexanol (HSP value = 21.2), benzyl alcohol (HSP value = 23.8), diethylene glycol (HSP value = 27.9), dipropylene glycol (HSP value = 26.4), and benzyl alcohol (HSP value = 23.8).

Examples of the hydrocarbon having an HSP value of 10 to 45 include benzene (HSP value = 18.5), toluene (HSP value = 18.2), styrene (HSP value = 19.1), hexane (HSP value = 14.9), cyclohexane (HSP value = 16.8), heptane (HSP value = 15.3), and methylcyclohexane (HSP value = 16.0).

Examples of the ketone having an HSP value of 10 to 45 include acetone (HSP value = 19.9) and methyl ethyl ketone (HSP value = 19.1).

Examples of the ester having an HSP value of 10 to 45 include ethyl acetate (HSP value = 18.2).

Examples of the ether having an HSP value of 10 to 45 include tetrahydrofuran (HSP value = 19.5) and cyclopentyl methyl ether (HSP value = 17.8).

Examples of the amine having an HSP value of 10 to 45 include aniline (HSP value = 23.7).

Examples of the nitrile having an HSP value of 10 to 45 include acetonitrile (HSP value = 24.4).

Examples of the carboxylic acid having an HSP value of 10 to 45 include acetic acid (HSP value = 21.4).

Examples of the terpene having an HSP value of 10 to 45 include d-limonene (HSP value = 17.8).

Examples of the nitro compound having an HSP value of 10 to 45 include nitrobenzene (HSP value = 22.8).

Examples of the halogen compound having an HSP value of 10 to 45 include chloroform (HSP value = 18.9) and carbon tetrachloride (HSP value = 17.8).

An HSP value is a Hansen solubility parameter value, and is determined by dividing a Hildebrand solubility parameter into three components which are a dispersion term ($\delta_D$), a polar term ($\delta_P$), and a hydrogen bonding term ($\delta_H$) and taking the polarity of a substance into account. The dispersion term (the term relating to the van der Waals force), the polar term (the term relating to a dipole moment), and the hydrogen bonding term (the term relating to a hydrogen bond) can be expressed as three-dimensional coordinates.

The Hansen solubility parameter value of a liquid mixture of two or more liquids is determined from volume fractions of dispersion terms, polar terms, hydrogen bonding terms of the solvents, as can be seen from the following formula (1). It should be noted that $\delta_{D1}$ and $\delta_{D2}$ are dispersion terms of the liquid components, $\delta_{P1}$ and $\delta_{P2}$ are polar terms of the liquid components, $\delta_{H1}$ and $\delta_{H2}$ are hydrogen bonding terms of the liquid components, and $\varphi_1$ and $\varphi_2$ are volume fractions of the liquid components.

$$m = \{(\delta_{D1}\varphi_1 + \delta_{D2}\varphi_2)^2 + (\delta_{P1}\varphi_1 + \delta_{P2}\varphi_2)^2 + (\delta_{H1}\varphi_1 + \delta_{H2}\varphi_2)^2\}^{1/2} \qquad (1)$$

The Hansen solubility parameter values of solvents are included in "HSPiP version 5". For solvents not included therein, values estimated from "HSPiP version 5" are used.

In the method according to the embodiment of the present invention for sorting a pressure-sensitive adhesive and a substrate, an appropriate composition and an appropriate content therein can be adopted for the mixture (A) including the pressure-sensitive adhesive, the substrate, and the first organic solvent as long as the mixture (A) includes the pressure-sensitive adhesive and the substrate to be sorted and the first organic solvent, unless the effect of the present invention is impaired.

One embodiment of the mixture (A) is a mixture obtained by impregnating a pressure-sensitive adhesive tape including the pressure-sensitive adhesive and the substrate with a pressure-sensitive adhesive treatment solution containing the first organic solvent. The phrase "impregnating the pressure-sensitive adhesive tape with the pressure-sensitive adhesive treatment solution" as used herein means creating a state where the pressure-sensitive adhesive included in the pressure-sensitive adhesive tape is allowed to be impregnated with the pressure-sensitive adhesive treatment solution, and is, for example, creating a state where at least a portion of the pressure-sensitive adhesive is immersed in the pressure-sensitive adhesive treatment solution. A state where at least a portion of the pressure-sensitive adhesive is immersed in the pressure-sensitive adhesive treatment solution allows the pressure-sensitive adhesive treatment solution to penetrate the pressure-sensitive adhesive. Therefore, the entire pressure-sensitive adhesive tape may be immersed in the pressure-sensitive adhesive treatment solution, or at least a portion of the pressure-sensitive adhesive tape may be immersed in the pressure-sensitive adhesive treatment solution, the portion including at least a portion of the pressure-sensitive adhesive.

Unless the effect of the present invention is impaired, an appropriate composition and an appropriate content therein can be adopted for the pressure-sensitive adhesive treatment solution containing the first organic solvent as long as the pressure-sensitive adhesive treatment solution includes the first organic solvent.

One embodiment of the pressure-sensitive adhesive treatment solution containing the first organic solvent includes the first organic solvent, water, and an alkaline compound.

The total content of the first organic solvent, the water, and the alkaline compound in the pressure-sensitive adhesive treatment solution containing the first organic solvent is preferably 50 wt% to 100 wt%, more preferably 70 wt% to 100 wt%, even more preferably 90 wt% to 100 wt%, particularly preferably 95 wt% to 100 wt%, most preferably 98 wt% to 100 wt% in that the effect of the present invention can be further exhibited.

When the total content of the first organic solvent and the water in the pressure-sensitive adhesive treatment solution containing the first organic solvent is defined as 100 vol%, the content of the water therein is preferably 15 vol% to 99.9 vol%, more preferably 25 vol% to 99.9 vol%, even more preferably 55 vol% to 99.9 vol%, particularly preferably 65 vol% to 99.9 vol%, most preferably 85 vol% to 99.9 vol% in that the effect of the present invention can be further exhibited.

When the total content of the first organic solvent and the water in the pressure-sensitive adhesive treatment solution containing the first organic solvent is defined as 100 vol%, the content of the first organic solvent therein is preferably 0.1 vol% to 85 vol%, more preferably 0.1 vol% to 75 vol%, even more preferably 0.1 vol% to 45 vol%, particularly preferably 0.1 vol% to 35 vol%, most preferably 0.1 vol% to 15 vol% in that the effect of the present invention can be further exhibited.

The concentration of the alkaline compound in the pressure-sensitive adhesive treatment solution containing the first organic solvent is preferably 0.001 wt% to 50 wt%, more preferably 1 wt% to 30 wt%, even more preferably 1 wt% to 15 wt%, particularly preferably 1 wt% to 10 wt%, most preferably 1 wt% to 5 wt% in that the effect of the present invention can be further exhibited.

When the mixture (A) is a mixture obtained by impregnating a pressure-sensitive adhesive tape including the pressure-sensitive adhesive and the substrate with the pressure-sensitive adhesive treatment solution containing the first organic solvent, it is preferable that at least one selected from the group consisting of stirring and ultrasonic irradiation be performed during the impregnation. In this case, the first organic solvent is dispersed in the water, and the pressure-sensitive adhesive can be selectively and efficiently impregnated with the first organic solvent included in the pressure-sensitive adhesive treatment solution, so that the pressure-sensitive adhesive can be more efficiently separated.

Regarding the stirring method, an appropriate stirring method can be adopted according to, for example, the type of pressure-sensitive adhesive unless the effect of the present invention is impaired. Regarding the stirring time as well, an appropriate stirring time can be adopted according to, for example, the type of pressure-sensitive adhesive unless the effect of the present invention is impaired.

Regarding the ultrasonic irradiation method, an appropriate ultrasonic irradiation method can be adopted according to, for example, the type of pressure-sensitive adhesive unless the effect of the present invention is impaired. Regarding the ultrasonic irradiation time as well, an appropriate ultrasonic irradiation time can be adopted according to, for example, the type of pressure-sensitive adhesive unless the effect of the present invention is impaired.

When the mixture (A) is a mixture obtained by impregnating a pressure-sensitive adhesive tape including the pressure-sensitive adhesive and the substrate with the pressure-sensitive adhesive treatment solution containing the first organic solvent, an appropriate temperature can be adopted as the temperature of the pressure-sensitive adhesive treatment solution during the impregnation unless the effect of the present invention is impaired. The temperature is preferably 10°C or higher, more preferably 15°C or higher, even more preferably 20°C or higher, even more preferably 25°C or higher, even more preferably 30°C or higher, particularly preferably 35°C or higher in that the effect of the present invention can be further exhibited. The upper limit thereof is preferably 120°C or lower, more preferably 100°C or lower, even more preferably 80°C or lower.

When the mixture (A) is a mixture obtained by impregnating a pressure-sensitive adhesive tape including the pressure-sensitive adhesive and the substrate with the pressure-sensitive adhesive treatment solution containing the first organic solvent, the amount of use of the pressure-sensitive adhesive treatment solution containing the first organic solvent with respect to 100 parts by weight of the pressure-sensitive adhesive tape is preferably 100 parts by weight to 6000 parts by weight, more preferably 200 parts by weight to 3000 parts by weight, even more preferably 200 parts by weight to 1000 parts by weight, particularly preferably 200 parts by weight to 800 parts by weight, most preferably 200 parts by weight to 400 parts by weight.

In one typical embodiment of the mixture (A), the pressure-sensitive adhesive is one impregnated with the first organic solvent (hereinafter referred to as "first organic solvent-impregnated pressure-sensitive adhesive"). That is, one typical embodiment of the mixture (A) includes a pressure-sensitive adhesive, a substrate, and the first organic solvent, and the pressure-sensitive adhesive is a first organic solvent-impregnated pressure-sensitive adhesive in which the pressure-sensitive adhesive is impregnated with at least a portion of the first organic solvent. It should be noted that the amount of the first organic solvent impregnated in the first organic solvent-impregnated pressure-sensitive adhesive can vary depending on factors such as the type and the amount of the pressure-sensitive adhesive, the type and the amount of the first organic solvent, the composition of the pressure-sensitive adhesive treatment solution, and conditions for impregnation with the pressure-sensitive adhesive treatment solution.

The method according to the embodiment of the present invention for sorting a pressure-sensitive adhesive and a substrate is a method for sorting, from the mixture (A) including a pressure-sensitive adhesive, a substrate, and the first organic solvent, the pressure-sensitive adhesive and the substrate, and at least one operation selected from the group consisting of (i), (ii), and (iii) below is performed:

(i) an operation of stirring the mixture (A) in a saturated aqueous solution of the first organic solvent;

(ii) an operation of stirring the mixture (A) in a water-containing liquid mixture containing at least one selected from the group consisting of a second organic solvent and a third organic solvent in an amount exceeding a saturation solubility thereof; and

(iii) an operation of, after immersion of the mixture (A) in the third organic solvent, recovering a mixture (B) obtained by the immersion and stirring the mixture (B) in water.

In each of the above operations (i) to (iii), the stirring may be followed by standing.

In the method according to the embodiment of the present invention for sorting a pressure-sensitive adhesive and a substrate, if necessary, the separated pressure-sensitive adhesive (which may be an organic solvent-impregnated pressure-sensitive adhesive in which the pressure-sensitive adhesive is impregnated with the organic solvent) and the separated substrate may be sorted and recovered after each of the above operations (i) to (iii), and, if necessary, drying and washing may be performed. The water and the organic solvent may be sorted and recovered, if necessary.

Operations (i) to (iii) will be described hereinafter.

<<<<Operation (i)>>>>

In operation (i), the mixture (A) including the pressure-sensitive adhesive, the substrate, and the first organic solvent is stirred in the saturated aqueous solution of the first organic solvent. That is, in operation (i), the mixture (A) is stirred in the saturated aqueous solution of the first organic solvent which is the same as the first organic solvent included in the mixture (A). In the saturated aqueous solution of the first organic solvent, the water and the first organic solvent are typically in a homogeneous phase.

In operation (i), the content of the mixture (A) in the saturated aqueous solution of the first organic solvent is preferably 0.1 wt% to 80 wt%, more preferably 0.1 wt% to 50 wt%, even more preferably 0.1 wt% to 20 wt%, particularly preferably 0.1 wt% to 5 wt% in that the effect of the present invention can be further exhibited.

In operation (i), when the mixture (A) including the pressure-sensitive adhesive, the substrate, and the first organic solvent is stirred in the saturated aqueous solution of the first organic solvent, the first organic solvent impregnated in the pressure-sensitive adhesive, namely, the first organic solvent-impregnated pressure-sensitive adhesive, can be apparently retained in the pressure-sensitive adhesive in the saturated aqueous solution of the first organic solvent under stirring (the state is unchanged by replacement by the first organic solvent included in the saturated aqueous solution of the first organic solvent). When the first organic solvent impregnated in the first organic solvent-impregnated pressure-sensitive adhesive is able to be retained as described above, readhesion of the pressure-sensitive adhesive and the substrate can be efficiently reduced. If the first organic solvent impregnated in the first organic solvent-impregnated pressure-sensitive adhesive leaches out, the pressure-sensitive adhesive agglomerates and solidifies in a water-containing liquid mixture and readhesion thereof to the substrate can happen.

In operation (i), the specific gravity of the pressure-sensitive adhesive before being impregnated with the first organic solvent is preferably 0.5 to 2.5, more preferably 0.5 to 2.0, even more preferably 0.5 to 1.8, particularly preferably 0.5 to 1.5 in that the first organic solvent-impregnated pressure-sensitive adhesive and the substrate can be easily sorted.

<<Embodiment (i-1)>>

An embodiment in which 1-butanol (HSP value = 23.2, specific gravity = 0.81) is adopted as the first organic solvent will be described hereinafter as a typical embodiment (i-1) of operation (i). It should be noted that operation (i) is not limited to a case where 1-butanol is adopted as the first organic solvent.

In embodiment (i-1), the mixture (A) includes a pressure-sensitive adhesive, a substrate, and 1-butanol, and the pressure-sensitive adhesive is typically a pressure-sensitive adhesive impregnated with at least a portion of the 1-butanol (hereinafter referred to as "1-butanol-impregnated pressure-sensitive adhesive").

In embodiment (i-1), the 1-butanol impregnated in the 1-butanol-impregnated pressure-sensitive adhesive can be apparently retained in the pressure-sensitive adhesive in the saturated aqueous solution of 1-butanol under stirring (the state is unchanged by replacement by the 1-butanol included in the saturated aqueous solution of 1-butanol). When the 1-butanol impregnated in the 1-butanol-impregnated pressure-sensitive adhesive is able to be retained as described above, readhesion of the pressure-sensitive adhesive and the substrate can be efficiently reduced. If the 1-butanol impregnated in the 1-butanol-impregnated pressure-sensitive adhesive leaches out, the pressure-sensitive adhesive agglomerates and solidifies in a water-based liquid and readhesion thereof to the substrate can happen.

Therefore, in embodiment (i-1), when the mixture (A) is stirred in the saturated aqueous solution of 1-butanol (typically, water:1-butanol = 92:8 (weight ratio)), the 1-butanol-impregnated pressure-sensitive adhesive can be present in the saturated aqueous solution of 1-butanol. Then, when the specific gravity of the 1-butanol-impregnated pressure-sensitive adhesive is smaller than that of the saturated aqueous solution of 1-butanol, the 1-butanol-impregnated pressure-sensitive adhesive floats to the surface in the saturated aqueous solution of 1-butanol.

To allow the 1-butanol-impregnated pressure-sensitive adhesive to easily float to the surface in the saturated aqueous solution of 1-butanol, the specific gravity of the pressure-sensitive adhesive before being impregnated with 1-butanol is preferably 0.5 to 2.0, more preferably 0.5 to 1.5, even more preferably 0.5 to 1.3, particularly preferably 0.5 to 1.1.

On the other hand, in embodiment (i-1), when the mixture (A) includes, as the substrate, a substrate (e.g., a polyethylene terephthalate (PET) substrate) having a higher specific gravity than that of the saturated aqueous solution of 1-butanol, the substrate sinks in the saturated aqueous solution of 1-butanol.

As described above, in operation (i), the pressure-sensitive adhesive and the substrate in the mixture (A) is separated by the difference in specific gravity in the saturated aqueous solution of the first organic solvent. The pressure-sensitive adhesive and the substrate separated in the saturated aqueous solution of the first organic solvent are sorted and recovered by an appropriate method (e.g., recovering a supernatant by overflowing induced by excessive addition of the saturated aqueous solution of the first organic solvent).

In operation (i), in particular, when the specific gravity of the first organic solvent-impregnated pressure-sensitive adhesive is lower than that of the saturated aqueous solution of the first organic solvent and the specific gravity of the substrate is higher than that of the saturated aqueous solution of the first organic solvent, the first organic solvent-impregnated pressure-sensitive adhesive floats to the surface and the substrate sinks. Thus, efficient sorting can be achieved.

<<<<Operation (ii)>>>>

In operation (ii), the mixture (A) including the pressure-sensitive adhesive, the substrate, and the first organic solvent is stirred in the water-containing liquid mixture containing at least one selected from the group consisting of the second organic solvent and the third organic solvent in an amount exceeding the saturation solubility thereof. It should be noted that the term "water-containing liquid mixture containing at least one selected from the group consisting of the second organic solvent and the third organic solvent in an amount exceeding the saturation solubility thereof" is a liquid mixture of water and at least one selected from the group consisting of the second organic solvent and the third organic solvent, and the amount of the at least one selected from the group consisting of the second organic solvent and the third organic solvent exceeds its saturation solubility in water. Additionally, in the water-containing liquid mixture containing at least one selected from the group consisting of the second organic solvent and the third organic solvent in an amount exceeding the saturation solubility thereof, the water and the at least one selected from the group consisting of the second organic solvent and the third organic solvent are in a phase separation state.

In operation (ii), the content of the mixture (A) in the water-containing liquid mixture containing at least one selected from the group consisting of the second organic solvent and the third organic solvent in an amount exceeding the saturation solubility thereof is preferably 0.1 wt% to 80 wt%, more preferably 0.1 wt% to 50 wt%, even more preferably 0.1 wt% to 20 wt%, particularly preferably 0.1 wt% to 5 wt% in that the effect of the present invention can be further exhibited.

An appropriate organic solvent can be adopted as the second organic solvent unless the effect of the present invention is impaired. The second organic solvent may be composed of only one second organic solvent, or may be composed of two or more second organic solvents. The second organic solvent is typically, for example, an organic solvent having an HSP value of 10 to 45 and a solubility in water of more than 10 g/L and 500 g/L or less at 20°C. The HSP value thereof is preferably 15 to 40, more preferably 15 to 35, even more preferably 15 to 30, particularly preferably 15 to 25. The solubility thereof in water at 20°C is preferably 15 g/L to 400 g/L, more preferably 20 g/L to 300 g/L, particularly preferably 25 g/L to 200 g/L, most preferably 30 g/L to 100 g/L.

The second organic solvent is typically a slightly water-soluble organic solvent, as described above.

Examples of the second organic solvent include 1-butanol (HSP value = 23.2, solubility in water = 77 g/L (20°C), specific gravity = 0.81), benzyl alcohol (HSP value = 23.8, solubility in water = 35 g/L (25°C), specific gravity = 1.04), and ethyl acetate (HSP value = 18.2, solubility in water = 83 g/L (20°C), specific gravity = 0.90).

An appropriate organic solvent can be adopted as the third organic solvent unless the effect of the present invention is impaired. The third organic solvent may be composed of only one third organic solvent, or may be composed of two or more third organic solvents. The third organic solvent is typically, for example, an organic solvent having an HSP value of 10 to 45 and a solubility in water of 10 g/L or less at 20°C. The HSP value thereof is preferably 15 to 40, more preferably 15 to 35, even more preferably 15 to 30, particularly preferably 15 to 25. The solubility thereof in water at 20°C is preferably 0 g/L to 9 g/L.

The third organic solvent is typically a water-insoluble organic solvent which is hardly soluble in water, as described above.

Examples of the third organic solvent include toluene (HSP value = 18.2, solubility in water = 526 mg/L (25°C), specific gravity = 0.87), nitrobenzene (HSP value = 22.8, solubility in water = 1.8 g/L (25°C), specific gravity = 1.21), chloroform (HSP value = 18.9, solubility in water = 8 g/L (20°C), specific gravity = 1.48), and carbon tetrachloride (HSP value = 17.8, solubility in water = 800 mg/L (20°C), specific gravity = 1.63).

In the case where the second organic solvent is the same as the first organic solvent, when the mixture (A) including the pressure-sensitive adhesive, the substrate, and the first organic solvent is stirred in a water-containing liquid mixture containing the second organic solvent in an amount exceeding its saturation solubility, the first organic solvent impregnated in the pressure-sensitive adhesive, namely, the first organic solvent-impregnated pressure-sensitive adhesive, can be apparently retained in the pressure-sensitive adhesive in the water-containing liquid mixture under stirring containing the second organic solvent (= the first organic solvent) in an amount exceeding its saturation solubility (the state is unchanged by replacement by the second organic solvent (= the first organic solvent)). When the first organic solvent impregnated in the first organic solvent-impregnated pressure-sensitive adhesive is able to be retained as described above, readhesion of the pressure-sensitive adhesive and the substrate can be efficiently reduced. If the first organic solvent impregnated in the first organic solvent-impregnated pressure-sensitive adhesive leaches out, the pressure-sensitive adhesive agglomerates and solidifies in a water-containing liquid mixture and readhesion thereof to the substrate can happen.

On the other hand, in the case where the second organic solvent is different from the first organic solvent, when the mixture (A) including the pressure-sensitive adhesive, the substrate, and the first organic solvent is stirred in a water-containing liquid mixture containing the second organic solvent in an amount exceeding its saturation solubility, the first organic solvent impregnated in the pressure-sensitive adhesive, namely, the first organic solvent-impregnated pressure-sensitive adhesive, may be replaced by the second organic solvent in the water-containing liquid mixture under stirring containing the second organic solvent in an amount exceeding its saturation solubility. In the case where the first organic solvent impregnated in the first organic solvent-impregnated pressure-sensitive adhesive is replaced by the second organic solvent as above, the pressure-sensitive adhesive is still able to retain the organic solvent and thus readhesion of the pressure-sensitive adhesive and the substrate can be efficiently reduced. If the first organic solvent impregnated in the first organic solvent-impregnated pressure-sensitive adhesive leaches out and is not replaced by the second organic solvent, the pressure-sensitive adhesive agglomerates and solidifies in a water-containing liquid mixture and readhesion thereof to the substrate can happen.

This also applies to the third organic solvent. In the case where the third organic solvent is the same as the first organic solvent, when the mixture (A) including the pressure-sensitive adhesive, the substrate, and the first organic solvent is stirred in a water-containing liquid mixture containing the third organic solvent in an amount exceeding its saturation solubility, the first organic solvent impregnated in the pressure-sensitive adhesive, namely, the first organic solvent-impregnated pressure-sensitive adhesive, can be apparently retained in the pressure-sensitive adhesive in the water-containing liquid mixture under stirring containing the third organic solvent (= the first organic solvent) in an amount exceeding its saturation solubility (the state is unchanged by replacement by the third organic solvent (= the first organic solvent)). When the first organic solvent impregnated in the first organic solvent-impregnated pressure-sensitive adhesive is able to be retained as described above, readhesion of the pressure-sensitive adhesive and the substrate can be efficiently reduced. If the first organic solvent impregnated in the first organic solvent-impregnated pressure-sensitive adhesive leaches out, the pressure-sensitive adhesive agglomerates and solidifies in a water-containing liquid mixture and readhesion thereof to the substrate can happen.

On the other hand, in the case where the third organic solvent is different from the first organic solvent, when the mixture (A) including the pressure-sensitive adhesive, the substrate, and the first organic solvent is stirred in a water-containing liquid mixture containing the third organic solvent in an amount exceeding its saturation solubility, the first organic solvent impregnated in the pressure-sensitive adhesive, namely, the first organic solvent-impregnated pressure-sensitive adhesive, may be replaced by the third organic solvent in the water-containing liquid mixture under stirring containing the third organic solvent in an amount exceeding its saturation solubility. In the case where the first organic solvent impregnated in the first organic solvent-impregnated pressure-sensitive adhesive is replaced by the third organic solvent as above, the pressure-sensitive adhesive is still able to retain the organic solvent and thus readhesion of the pressure-sensitive adhesive and the substrate can be efficiently reduced. If the first organic solvent impregnated in the first organic solvent-impregnated pressure-sensitive adhesive leaches out and is not replaced by the third organic solvent, the pressure-sensitive adhesive agglomerates and solidifies in a water-containing liquid mixture and readhesion thereof to the substrate can happen.

<<Embodiment (ii-1)>>

An embodiment in which 1-butanol (HSP value = 23.2, solubility in water = 77 g/L (20°C), specific gravity = 0.81) is adopted as the second organic solvent will be described hereinafter as a typical embodiment (ii-1) of operation (ii). Additionally, a mixture including a pressure-sensitive adhesive, a substrate, and 1-butanol is adopted and described as a typical example of the mixture (A) in embodiment (ii-1).

It should be noted that operation (ii) is not limited to a case where 1-butanol is adopted as the second organic solvent. Additionally, in operation (ii), the mixture (A) is not limited to one including a pressure-sensitive adhesive, a substrate, and 1-butanol.

In embodiment (ii-1), the mixture (A) includes a pressure-sensitive adhesive, a substrate, and 1-butanol, and the pressure-sensitive adhesive is typically a 1-butanol-impregnated pressure-sensitive adhesive.

In embodiment (ii-1), the 1-butanol impregnated in the 1-butanol-impregnated pressure-sensitive adhesive can be apparently retained in the pressure-sensitive adhesive in a water-containing liquid mixture under stirring containing 1-butanol in an amount exceeding its saturation solubility (the state is unchanged by replacement by the 1-butanol in the liquid mixture). When the 1-butanol impregnated in the 1-butanol-impregnated pressure-sensitive adhesive is able to be retained as described above, readhesion of the pressure-sensitive adhesive and the substrate can be efficiently reduced. If the 1-butanol impregnated in the 1-butanol-impregnated pressure-sensitive adhesive leaches out, the pressure-sensitive adhesive agglomerates and solidifies in a water-based liquid and readhesion thereof to the substrate can happen.

Therefore, in embodiment (ii-1), when the mixture (A) is stirred in the water-containing liquid mixture containing 1-butanol in an amount exceeding its saturation solubility (e.g., water/1-butanol = 90/10 (weight ratio)), the 1-butanol-impregnated pressure-sensitive adhesive can be present in the water-containing liquid mixture containing 1-butanol in an amount exceeding its saturation solubility. When the water-containing liquid mixture containing 1-butanol in an amount exceeding its saturation solubility is left to stand still, the liquid mixture can form two layers: 1-butanol as the upper layer and the saturated aqueous solution of 1-butanol as the lower layer. In a case where the specific gravity of the 1-butanol-impregnated pressure-sensitive adhesive is higher than that of 1-butanol, as is normally the case, the 1-butanol-impregnated pressure-sensitive adhesive appears to float to the surface when the supernatant of 1-butanol forms a very thin layer as in examples described later. On the other hand, in a case where the specific gravity of the 1-butanol-impregnated pressure-sensitive adhesive is lower than that of 1-butanol, the 1-butanol-impregnated pressure-sensitive adhesive floats to the surface in the water-containing liquid mixture containing 1-butanol in an amount exceeding its saturation solubility.

In embodiment (ii-1), to allow the 1-butanol-impregnated pressure-sensitive adhesive to easily float to the surface in the water-containing liquid mixture containing 1-butanol in an amount exceeding its saturation solubility, the specific gravity of the pressure-sensitive adhesive is preferably 0.5 to 2.0, more preferably 0.5 to 1.5, even more preferably 0.5 to 1.3, particularly preferably 0.5 to 1.1.

On the other hand, in embodiment (ii-1), when the mixture (A) includes, as the substrate, a substrate (e.g., a polyethylene terephthalate (PET) substrate) having a higher specific gravity than that of the saturated aqueous solution of 1-butanol, the substrate sinks in the water-containing liquid mixture containing 1-butanol in an amount exceeding its saturation solubility.

As described above, in embodiment (ii-1), the pressure-sensitive adhesive and the substrate in the mixture (A) are separated by the difference in specific gravity in the water-containing liquid mixture containing 1-butanol in an amount exceeding its saturation solubility. The pressure-sensitive adhesive and the substrate separated in the water-containing liquid mixture containing 1-butanol in an amount exceeding its saturation solubility are sorted and recovered by an appropriate method (e.g., recovering a supernatant by overflowing induced by excessive addition of a water-containing liquid mixture containing 1-butanol in an amount exceeding its saturation solubility.

In operation (ii-1), in particular, when the specific gravity of the first organic solvent-impregnated pressure-sensitive adhesive is higher than that of the first organic solvent, the layer formed of the first organic solvent exceeding its solubility limit is a thin layer. Or, when the specific gravity of the first organic solvent-impregnated pressure-sensitive adhesive is lower than that of the first organic solvent and the specific gravity of the substrate is higher than that of the saturated aqueous solution of the first organic solvent, the first organic solvent-impregnated pressure-sensitive adhesive floats to the surface and the substrate sinks. Thus, efficient sorting can be achieved.

<<Embodiment (ii-2)>>

An embodiment in which benzyl alcohol (HSP value = 23.8, solubility in water = 35 g/L (25°C), specific gravity = 1.04) is adopted as the second organic solvent will be described hereinafter as another typical embodiment (ii-2) of operation (ii). Additionally, a mixture including a pressure-sensitive adhesive, a substrate, and 1-butanol is adopted and described as a typical example of the mixture (A) in embodiment (ii-2).

It should be noted that operation (ii) is not limited to a case where benzyl alcohol is adopted as the second organic solvent. Additionally, in operation (ii), the mixture (A) is not limited to one including a pressure-sensitive adhesive, a substrate, and 1-butanol.

In embodiment (ii-2), the mixture (A) includes a pressure-sensitive adhesive, a substrate, and 1-butanol, and the pressure-sensitive adhesive is typically a 1-butanol-impregnated pressure-sensitive adhesive.

In embodiment (ii-2), the 1-butanol impregnated in the 1-butanol-impregnated pressure-sensitive adhesive can be replaced by benzyl alcohol in a water-containing liquid mixture under stirring containing benzyl alcohol in an amount exceeding its saturation solubility (the pressure-sensitive adhesive after the replacement is hereinafter referred to as "benzyl alcohol-impregnated pressure-sensitive adhesive"). In the case where the 1-butanol impregnated in the 1-butanol-impregnated pressure-sensitive adhesive is replaced by benzyl alcohol as above, the pressure-sensitive adhesive is still able to retain the organic solvent and thus readhesion of the pressure-sensitive adhesive and the substrate can be efficiently reduced. If the 1-butanol impregnated in the 1-butanol-impregnated pressure-sensitive adhesive leaches out and is not replaced by benzyl alcohol, the pressure-sensitive adhesive agglomerates and solidifies in a water-containing liquid mixture and readhesion thereof to the substrate can happen.

Therefore, in embodiment (ii-2), when the mixture (A) is stirred in the water-containing liquid mixture containing benzyl alcohol in an amount exceeding its saturation solubility (e.g., water/benzyl alcohol = 50/50 (weight ratio)), the benzyl alcohol-impregnated pressure-sensitive adhesive can be present in the water-containing liquid mixture containing benzyl alcohol in an amount exceeding its saturation solubility. When the water-containing liquid mixture containing benzyl alcohol in an amount exceeding its saturation solubility is left to stand still, the liquid mixture can form two layers: a saturated aqueous solution of benzyl alcohol as the upper layer and benzyl alcohol as the lower layer. Hence, there can be the following two sorting types in embodiment (ii-2).

<Sorting type 1> When the specific gravity of the benzyl alcohol-impregnated pressure-sensitive adhesive is lower than that of the saturated aqueous solution of benzyl alcohol and the specific gravity of the substrate is higher than that of benzyl alcohol, the benzyl alcohol-impregnated pressure-sensitive adhesive floats to the surface and the substrate sinks.
<Sorting type 2> When the specific gravity of the benzyl alcohol-impregnated pressure-sensitive adhesive is higher than that of benzyl alcohol and the specific gravity of the substrate is lower than that of the saturated aqueous solution of benzyl alcohol, the benzyl alcohol-impregnated pressure-sensitive adhesive sinks and the substrate floats to the surface.

As described above, in embodiment (ii-2), the pressure-sensitive adhesive and the substrate in the mixture (A) are separated by the difference in specific gravity in the water-containing liquid mixture containing benzyl alcohol in an amount exceeding its saturation solubility. The pressure-sensitive adhesive and the substrate separated in the water-containing liquid mixture containing benzyl alcohol in an amount exceeding its saturation solubility are sorted and recovered by an appropriate method (e.g., recovering a supernatant by overflowing induced by excessive addition of a water-containing liquid mixture containing benzyl alcohol in an amount exceeding its saturation solubility.

As described above, in embodiment (ii-2), in particular, (1) when the specific gravity of the second organic solvent-impregnated pressure-sensitive adhesive is lower than that of the saturated aqueous solution of the second organic solvent and the specific gravity of the substrate is higher than that of the second organic solvent, the second organic solvent-impregnated pressure-sensitive adhesive floats to the surface and the substrate sinks. Or, (2) when the specific gravity of the second organic solvent-impregnated pressure-sensitive adhesive is higher than that of the second organic solvent and the specific gravity of the substrate is lower than that of the saturated aqueous solution of the second organic solvent, the second organic solvent-impregnated pressure-sensitive adhesive sinks and the substrate floats to the surface. Thus, efficient sorting can be achieved.

In embodiment (ii-2), to allow the second organic solvent-impregnated pressure-sensitive adhesive to easily float to the surface in the water-containing liquid mixture containing the second organic solvent in an amount exceeding its saturation solubility, the specific gravity of the pressure-sensitive adhesive is preferably 0.5 to 1.0, more preferably 0.5 to 0.9, even more preferably 0.5 to 0.8, particularly preferably 0.5 to 0.7.

In embodiment (ii-2), to allow the second organic solvent-impregnated pressure-sensitive adhesive to easily sink in the water-containing liquid mixture containing the second organic solvent in an amount exceeding its saturation solubility, the specific gravity of the pressure-sensitive adhesive is preferably 1.0 to 2.5, more preferably 1.1 to 2.5, even more preferably 1.2 to 2.5, particularly preferably 1.3 to 2.5.

<<Embodiment (ii-3)>>

An embodiment in which chloroform (HSP value = 18.9, solubility in water = 8 g/L (20°C), specific gravity = 1.48) is adopted as the third organic solvent will be described hereinafter as yet another typical embodiment (ii-3) of operation (ii).

Additionally, in embodiment (ii-3), a mixture including a pressure-sensitive adhesive, a substrate, and 1-butanol will be described as a typical example of the mixture (A).

It should be noted that operation (ii) is not limited to a case where chloroform is adopted as the third organic solvent. Additionally, in operation (ii), the mixture (A) is not limited to one including a pressure-sensitive adhesive, a substrate, and 1-butanol.

In embodiment (ii-3), the mixture (A) includes a pressure-sensitive adhesive, a substrate, and 1-butanol, and the pressure-sensitive adhesive is typically a 1-butanol-impregnated pressure-sensitive adhesive.

In embodiment (ii-3), the 1-butanol impregnated in the 1-butanol-impregnated pressure-sensitive adhesive can be replaced by chloroform in a water-containing liquid mixture under stirring containing chloroform in an amount exceeding its saturation solubility (the pressure-sensitive adhesive after the replacement is hereinafter referred to as "chloroform-impregnated pressure-sensitive adhesive"). In the case where the 1-butanol impregnated in the 1-butanol-impregnated pressure-sensitive adhesive is replaced by chloroform as above, the pressure-sensitive adhesive is still able to retain the organic solvent and thus readhesion of the pressure-sensitive adhesive and the substrate can be efficiently reduced. If the 1-butanol impregnated in the 1-butanol-impregnated pressure-sensitive adhesive leaches out and is not replaced by chloroform, the pressure-sensitive adhesive agglomerates and solidifies in a water-containing liquid mixture and readhesion thereof to the substrate can happen.

Therefore, in embodiment (ii-3), when the mixture (A) is stirred in the water-containing liquid mixture containing chloroform in an amount exceeding its saturation solubility (e.g., water/chloroform = 50/50 (weight ratio)), the chloroform-impregnated pressure-sensitive adhesive can be present in the water-containing liquid mixture containing chloroform in an amount exceeding its saturation solubility. When the water-containing liquid mixture containing chloroform in an amount exceeding its saturation solubility is left to stand still, the liquid mixture can form two layers: a saturated aqueous solution of chloroform as the upper layer and chloroform as the lower layer. Hence, there can be the following two sorting types in embodiment (ii-3).

<Sorting type 1> When the specific gravity of the chloroform-impregnated pressure-sensitive adhesive is higher than that of chloroform and the specific gravity of the substrate is lower than that of the saturated aqueous solution of chloroform, the chloroform-impregnated pressure-sensitive adhesive sinks and the substrate floats to the surface.

<Sorting type 2> When the specific gravity of the chloroform-impregnated pressure-sensitive adhesive is lower than that of the saturated aqueous solution of chloroform and the specific gravity of the substrate is higher than that of chloroform, the chloroform-impregnated pressure-sensitive adhesive floats to the surface and the substrate sinks.

In embodiment (ii-3), if standing follows the stirring, the chloroform-impregnated pressure-sensitive adhesive may float near the interface between the two layers, i.e., the upper layer (the saturated aqueous solution of chloroform) and the lower layer (chloroform). In this case, sorting can be achieved by putting the liquid mixture into a stirred state without leaving it to stand still.

As described above, in embodiment (ii-3), the pressure-sensitive adhesive and the substrate in the mixture (A) are separated by the difference in specific gravity in the water-containing liquid mixture containing chloroform in an amount exceeding its saturation solubility. The pressure-sensitive adhesive and the substrate separated in the water-containing liquid mixture containing chloroform in an amount exceeding its saturation solubility are sorted and recovered by an appropriate method (e.g., recovering a supernatant by overflowing induced by excessive addition of a water-containing liquid mixture containing chloroform in an amount exceeding its saturation solubility.

As described above, in embodiment (ii-3), in particular, (1) when the specific gravity of the third organic solvent-impregnated pressure-sensitive adhesive is higher than that of the third organic solvent and the specific gravity of the substrate is lower than that of the saturated aqueous solution of the third organic solvent, the third organic solvent-impregnated pressure-sensitive adhesive floats to the surface and the substrate sinks. Or, (2) when the specific gravity of the third organic solvent-impregnated pressure-sensitive adhesive is lower than that of the saturated aqueous solution of the third organic solvent and the specific gravity of the substrate is higher than that of the third organic solvent, the third organic solvent-impregnated pressure-sensitive adhesive floats to the surface and the substrate sinks. Thus, efficient sorting can be achieved.

In embodiment (ii-3), to allow the third organic solvent-impregnated pressure-sensitive adhesive to easily float to the surface in the water-containing liquid mixture containing the third organic solvent in an amount exceeding its saturation solubility, the specific gravity of the pressure-sensitive adhesive is preferably 0.5 to 0.8, more preferably 0.5 to 0.7, even more preferably 0.5 to 0.6.

In embodiment (ii-3), to allow the third organic solvent-impregnated pressure-sensitive adhesive to easily sink in the water-containing liquid mixture containing the third organic solvent in an amount exceeding its saturation solubility, the specific gravity of the pressure-sensitive adhesive is preferably 0.8 to 2.5, more preferably 1.0 to 2.5, even more preferably 1.2 to 2.5, particularly preferably 1.5 to 2.5.

<<<<Operation (iii)>>>>

In operation (iii), after the mixture (A) including the pressure-sensitive adhesive, the substrate, and the first organic solvent is immersed in the third organic solvent, the mixture (B) obtained by the immersion is recovered and stirred in water.

In operation (iii), typically, the first organic solvent and the third organic solvent are different from each other.

In operation (iii), by immersing the mixture (A) in the third organic solvent, the first organic solvent impregnated in the pressure-sensitive adhesive included in the mixture (A), namely, the first organic solvent-impregnated pressure-sensitive adhesive, can be replaced by the third organic solvent. Therefore, the mixture (B) includes the pressure-sensitive adhesive, the substrate, and the third organic solvent, and the pressure-sensitive adhesive is a third organic solvent-impregnated pressure-sensitive adhesive impregnated with at least a portion of the third organic solvent. In the case of stirring the mixture (B) in water, there can be different sorting types as shown below depending on the specific gravities of the third organic solvent-impregnated pressure-sensitive adhesive and the substrate included in the mixture (B).

In one sorting type, in the case where the specific gravity of the third organic solvent-impregnated pressure-sensitive adhesive is lower than that of water and the specific gravity of the substrate is higher than that of water, stirring the mixture (B) in water allows the third organic solvent-impregnated pressure-sensitive adhesive to float to the surface in the water and the substrate to sink in the water.

In another sorting type, in the case where the specific gravity of the third organic solvent-impregnated pressure-sensitive adhesive is higher than that of water and the specific gravity of the substrate is lower than that of water, stirring the mixture (B) in water allows the third organic solvent-impregnated pressure-sensitive adhesive to sink in the water and the substrate to float to the surface in the water.

In operation (iii), the proportion of the third organic solvent used with respect to 100 parts by weight of the mixture (A) is preferably 50 parts by weight to 1000 parts by weight, more preferably 100 parts by weight to 1000 parts by weight, even more preferably 150 parts by weight to 1000 parts by weight, particularly preferably 200 parts by weight to 1000 parts by weight in that the effect of the present invention can be further exhibited.

In operation (iii), the proportion of the water used with respect to 100 parts by weight of the mixture (B) is preferably 50 parts by weight to 1000 parts by weight, more preferably 100 parts by weight to 1000 parts by weight, even more preferably 150 parts by weight to 1000 parts by weight, particularly preferably 200 parts by weight to 1000 parts by weight in that the effect of the present invention can be further exhibited.

<<Embodiment (iii-1)>>

An embodiment in which toluene (HSP value = 18.2, specific gravity = 0.87) is adopted as the third organic solvent will be described hereinafter as a typical embodiment (iii-1) of operation (iii). Additionally, in embodiment (iii-1), a mixture including a pressure-sensitive adhesive, a substrate, and 1-butanol will be described as a typical example of the mixture (A).

It should be noted that operation (iii) is not limited to a case where toluene is adopted as the third organic solvent. Additionally, in operation (iii), the mixture (A) is not limited to one including a pressure-sensitive adhesive, a substrate, and 1-butanol.

In embodiment (iii-1), the mixture (A) includes a pressure-sensitive adhesive, a substrate, and 1-butanol, and the pressure-sensitive adhesive is typically a 1-butanol-impregnated pressure-sensitive adhesive.

In embodiment (iii-1), by immersing the mixture (A) in toluene, the 1-butanol impregnated in the 1-butanol-impregnated pressure-sensitive adhesive included in the mixture (A) can be replaced by toluene. Then, the mixture (B) obtained by the immersion is taken out. The mixture (B) includes the pressure-sensitive adhesive, the substrate, and toluene, and the pressure-sensitive adhesive is a toluene-impregnated pressure-sensitive adhesive. There can be the following two sorting types in the case of stirring this mixture (B) in water.

<Sorting type 1> When the specific gravity of the toluene-impregnated pressure-sensitive adhesive is lower than that of water and the specific gravity of the substrate is higher than that of water, the toluene-impregnated pressure-sensitive adhesive floats to the surface in the water and the substrate sinks in the water.
<Sorting type 2> When the specific gravity of the toluene-impregnated pressure-sensitive adhesive is higher than that of water and the specific gravity of the substrate is lower than that of water, the toluene-impregnated pressure-sensitive adhesive sinks in the water and the substrate floats to the surface in the water.

As described above, in embodiment (iii-1), in particular, (1) when the specific gravity of the third organic solvent-impregnated pressure-sensitive adhesive is lower than that of water and the specific gravity of the substrate is higher than that of water, the third organic solvent-impregnated pressure-sensitive adhesive floats to the surface and the substrate sinks. Or, (2) when the specific gravity of the third organic solvent-impregnated pressure-sensitive adhesive is higher than that of water and the specific gravity of the substrate is lower than that of water, the third organic solvent-impregnated pressure-sensitive adhesive sinks and the substrate floats to the surface. Thus, efficient sorting can be achieved.

In embodiment (iii-1), to allow the third organic solvent-impregnated pressure-sensitive adhesive to easily float to the surface in the water, the specific gravity of the pressure-sensitive adhesive is preferably 0.5 to 1.2, more preferably 0.5 to 1.1, even more preferably 0.5 to 1.0, particularly preferably 0.5 to 0.9.

In embodiment (iii-1), to allow the third organic solvent-impregnated pressure-sensitive adhesive to easily sink in the water, the specific gravity of the pressure-sensitive adhesive is preferably 1.1 to 2.5, more preferably 1.5 to 2.5, even more preferably 1.8 to 2.5, particularly preferably 2.0 to 2.5.

<<Embodiment (iii-2)>>

An embodiment in which chloroform (HSP value = 18.9, specific gravity = 1.48) is adopted as the third organic solvent will be described hereinafter as another typical embodiment (iii-2) of operation (iii). Additionally, in embodiment (iii-2), a mixture including a pressure-sensitive adhesive, a substrate, and 1-butanol will be described as a typical example of the mixture (A).

It should be noted that operation (iii) is not limited to a case where chloroform is adopted as the third organic solvent. Additionally, in operation (iii), the mixture (A) is not limited to one including a pressure-sensitive adhesive, a substrate, and 1-butanol.

In embodiment (iii-2), the mixture (A) includes a pressure-sensitive adhesive, a substrate, and 1-butanol, and the pressure-sensitive adhesive is typically a 1-butanol-impregnated pressure-sensitive adhesive.

In embodiment (iii-2), by immersing the mixture (A) in chloroform, the 1-butanol impregnated in the 1-butanol-impregnated pressure-sensitive adhesive included in the mixture (A) can be replaced by chloroform. Then, the mixture (B) obtained by the immersion is taken out. The mixture (B) includes the pressure-sensitive adhesive, the substrate, and chloroform, and the pressure-sensitive adhesive is a chloroform-impregnated pressure-sensitive adhesive. There can be the following two sorting types in the case of stirring this mixture (B) in water.

<Sorting type 1> When the specific gravity of the chloroform-impregnated pressure-sensitive adhesive is lower than that of water and the specific gravity of the substrate is higher than that of water, the chloroform-impregnated pressure-sensitive adhesive floats to the surface in the water and the substrate sinks in the water.

<Sorting type 2> When the specific gravity of the chloroform-impregnated pressure-sensitive adhesive is higher than that of water and the specific gravity of the substrate is lower than that of water, the chloroform-impregnated pressure-sensitive adhesive sinks in the water and the substrate floats to the surface in the water.

As described above, in embodiment (iii-2), in particular, (1) when the specific gravity of the third organic solvent-impregnated pressure-sensitive adhesive is lower than that of water and the specific gravity of the substrate is higher than that of water, the third organic solvent-impregnated pressure-sensitive adhesive floats to the surface and the substrate sinks. Or, (2) when the specific gravity of the third organic solvent-impregnated pressure-sensitive adhesive is higher than that of water and the specific gravity of the substrate is lower than that of water, the third organic solvent-impregnated pressure-sensitive adhesive sinks and the substrate floats to the surface. Thus, efficient sorting can be achieved.

In embodiment (iii-2), to allow the third organic solvent-impregnated pressure-sensitive adhesive to easily float to the surface in the water, the specific gravity of the pressure-sensitive adhesive is preferably 0.5 to 0.8, more preferably 0.5 to 0.7, even more preferably 0.5 to 0.6.

In embodiment (iii-2), to allow the third organic solvent-impregnated pressure-sensitive adhesive to easily sink in the water, the specific gravity of the pressure-sensitive adhesive is preferably 0.8 to 2.5, more preferably 1.0 to 2.5, even more preferably 1.2 to 2.5, particularly preferably 1.5 to 2.5.

In embodiment (iii-2), chloroform (specific gravity = 1.48) which has a high specific gravity is adopted as the third organic solvent, and therefore the specific gravity of the chloroform-impregnated pressure-sensitive adhesive can be preferably higher than that of water. Hence, in this case, a substrate having a lower specific gravity than that of water is preferably selected as the substrate in embodiment (iii-2). A typical example of the substrate having a lower specific gravity than that of water is an olefin substrate.

EXAMPLES

Hereinafter, the present invention will be described in detail with examples. The present invention is not limited to these examples. Tests and an evaluation method for the examples, etc. are as shown below.

Pressure-sensitive adhesive tapes, substrates, and solvents used in Examples and Comparative Examples are as follows.

[Table 1]

| | | | Specific gravity | HSP value | Solubility in water (g/L) |
|---|---|---|---|---|---|
| Acrylic pressure-sensitive adhesive tape No.3195MS (manufactured by Nitto Denko Corporation) | Pressure-sensitive adhesive | Acrylic pressure-sensitive adhesive | 1.1 | - | - |
| | Substrate | PET substrate | 1.4 | - | - |
| Acrylic pressure-sensitive adhesive tape RP207 (manufactured by Nitto Denko Corporation) | Pressure-sensitive adhesive | Acrylic pressure-sensitive adhesive | 0.8 | - | - |
| | Substrate | PET substrate | 1.4 | - | - |
| Olefin substrate Torayfan (manufactured by Toray Industries, Inc.) | Substrate | Olefin substrate | 0.9 | - | - |
| Solvent | Water | | 1 | 30.1 | - |
| | Organic solvent | 1-Butanol | 0.81 | 23.2 | 77 (20°C) |
| | | Toluene | 0.87 | 18.2 | 0.526 (25°C) |
| | | Ethyl acetate | 0.9 | 18.2 | 83 (20°C) |
| | | Benzyl alcohol | 1.04 | 23.8 | 35 (25°C) |
| | | Nitrobenzene | 1.21 | 22.8 | 1.8 (25°C) |
| | | Chloroform | 1.48 | 18.9 | 8 (20°C) |
| | | Carbon tetrachloride | 1.63 | 17.8 | 0.8 (20°C) |

[Production Example 1]

Acrylic pressure-sensitive adhesive tape (manufactured by Nitto Denko Corporation under the product name "No.3195MS"; foamed) was cut into a piece measuring 20 mm × 20 mm to give a pressure-sensitive adhesive tape sample.

Potassium hydroxide was added at a concentration of 3 wt% to a mixed solution containing 1-butanol and water in a weight ratio of 10:90 to prepare a pressure-sensitive adhesive treatment solution.

An amount of 3.2 kg of the pressure-sensitive adhesive tape sample and 12.8 kg of the pressure-sensitive adhesive treatment solution heated to 70°C were added into a 20 L pale, and were stirred for 30 minutes using a drum shaker (manufactured by MISUGI LTD. under the product name "Mazemazeman"). Solid-liquid separation was performed using a filter, and then a mixture (A1) in solid form was recovered.

The mixture (A1) obtained was a mixture in which an acrylic pressure-sensitive adhesive derived from "No.3195MS" and a PET substrate were entangled, and the pressure-sensitive adhesive was impregnated with 1-butanol.

[Production Example 2]

A mixture (A2) in solid form was recovered in the same manner as in Production Example 1, except that the acrylic pressure-sensitive adhesive tape (manufactured by Nitto Denko Corporation under the product name "RP207") was used instead of acrylic pressure-sensitive adhesive tape (manufactured by Nitto Denko Corporation under the product name "No.3195MS"; foamed).

The mixture (A2) obtained was a mixture in which an acrylic pressure-sensitive adhesive derived from "RP207" and a PET substrate were entangled, and the pressure-sensitive adhesive was impregnated with 1-butanol.

[Production Example 3]

An acrylic pressure-sensitive adhesive part was physically cut and separated from acrylic pressure-sensitive adhesive tape (manufactured by Nitto Denko Corporation under the product name "No.3195MS"; foamed) to prepare an acrylic pressure-sensitive adhesive sample.

Separately, an olefin substrate (manufactured by Toray Industries, Inc. under the product name "Torayfan") was cut into a piece measuring 20 mm × 20 mm to prepare an olefin substrate sample.

Potassium hydroxide was added at a concentration of 3 wt% to a mixed solution containing 1-butanol and water in a weight ratio of 10:90 to prepare a pressure-sensitive adhesive treatment solution.

An amount of 30 g of the acrylic pressure-sensitive adhesive sample, 90 g of the olefin substrate sample, and 600 g of the pressure-sensitive adhesive treatment solution were added into a 1 L flask, and were stirred for 30 minutes while being immersed in a water bath heated to 70°C. Solid-liquid separation was performed using a filter, and then a mixture (A3) in solid form was recovered.

The mixture (A3) obtained was a mixture in which an acrylic pressure-sensitive adhesive derived from "No.3195MS" and an olefin substrate were entangled, and the pressure-sensitive adhesive was impregnated with 1-butanol.

[Production Example 4]

A mixture (A4) in solid form was recovered in the same manner as in Production Example 3, except that an acrylic pressure-sensitive adhesive part was physically cut and separated from acrylic pressure-sensitive adhesive tape (manufactured by Nitto Denko Corporation under the product name "RP207" ) to prepare an acrylic pressure-sensitive adhesive sample instead of physically cutting and separating an acrylic pressure-sensitive adhesive part from acrylic pressure-sensitive adhesive tape (manufactured by Nitto Denko Corporation under the product name "No.3195MS"; foamed) to prepare an acrylic pressure-sensitive adhesive sample.

The mixture (A4) obtained was a mixture in which an acrylic pressure-sensitive adhesive derived from "RP207" and an olefin substrate were entangled, and the pressure-sensitive adhesive was impregnated with 1-butanol.

[Example 1]: Mixture (A1) and Saturated Aqueous Solution of 1-Butanol

The mixture (A1) was added to a liquid mixture that is a saturated aqueous solution of 1-butanol and in which the weight ratio of water to 1-butanol is 92:8 so that the content of the mixture (A1) would be 5 wt%. The resulting mixture was stirred at 25°C for one minute and was then left to stand still.

A sorting status during the stirring and a sorting status during the standing were examined. Table 2 shows the results.

[Example 2]: Mixture (A2) and Saturated Aqueous Solution of 1-Butanol

The mixture (A2) was added to a liquid mixture that is a saturated aqueous solution of 1-butanol and in which the weight ratio of water to 1-butanol is 92:8 so that the content of the mixture (A2) would be 5 wt%. The resulting mixture was stirred at 25°C for one minute and was then left to stand still.

A sorting status during the stirring and a sorting status during the standing were examined. Table 2 shows the results.

[Example 3]: Mixture (A1) and Liquid Mixture in Which Water:1-Butanol = 90:10 (Weight Ratio)

The mixture (A1) was added to a liquid mixture that is a water-containing liquid mixture containing 1-butanol in an amount exceeding its saturation solubility and in which the weight ratio of water to 1-butanol is 90:10 so that the content of the mixture (A1) would be 5 wt%. The resulting mixture was stirred at 25°C for one minute and was then left to stand still.

A sorting status during the stirring and a sorting status during the standing were examined. Table 2 shows the results.

[Example 4]: Mixture (A2) and Liquid Mixture in Which Water:1-Butanol = 90:10 (Weight Ratio)

The mixture (A2) was added to a liquid mixture that is a water-containing liquid mixture containing 1-butanol in an amount exceeding its saturation solubility and in which the weight ratio of water to 1-butanol is 90:10 so that the content of the mixture (A2) would be 5 wt%. The resulting mixture was stirred at 25°C for one minute and was then left to stand still.

A sorting status during the stirring and a sorting status during the standing were examined. Table 2 shows the results.

[Example 5]: Mixture (A1) and Liquid Mixture in Which Water: Toluene = 90:10 (Weight Ratio)

The mixture (A1) was added to a liquid mixture in which the weight ratio of water to toluene is 90:10 and which is a water-containing liquid mixture containing toluene in an amount exceeding its saturation solubility so that the content of the mixture (A1) would be 5 wt%. The resulting mixture was stirred at 25°C for one minute and was then left to stand still.
A sorting status during the stirring and a sorting status during the standing were examined. Table 2 shows the results.

[Example 6]: Mixture (A2) and Liquid Mixture in Which Water: Toluene = 90:10 (Weight Ratio)

The mixture (A2) was added to a liquid mixture in which the weight ratio of water to toluene is 90:10 and which is a water-containing liquid mixture containing toluene in an amount exceeding its saturation solubility so that the content of the mixture (A2) would be 5 wt%. The resulting mixture was stirred at 25°C for one minute and was then left to stand still.
A sorting status during the stirring and a sorting status during the standing were examined. Table 2 shows the results.

[Example 7]: Mixture (A1) and Liquid Mixture in Which Water:Ethyl Acetate = 90:10 (Weight Ratio)

The mixture (A1) was added to a liquid mixture in which the weight ratio of water to ethyl acetate is 90:10 and which is a water-containing liquid mixture containing ethyl acetate in an amount exceeding its saturation solubility so that the content of the mixture (A1) would be 5 wt%. The resulting mixture was stirred at 25°C for one minute and was then left to stand still.
A sorting status during the stirring and a sorting status during the standing were examined. Table 2 shows the results.

[Example 8]: Mixture (A2) and Liquid Mixture in Which Water:Ethyl Acetate = 90:10 (Weight Ratio)

The mixture (A2) was added to a liquid mixture in which the weight ratio of water to ethyl acetate is 90:10 and which is a water-containing liquid mixture containing ethyl acetate in an amount exceeding its saturation solubility so that the content of the mixture (A2) would be 5 wt%. The resulting mixture was stirred at 25°C for one minute and was then left to stand still.
A sorting status during the stirring and a sorting status during the standing were examined. Table 2 shows the results.

[Example 9]: Mixture (A2) and Liquid Mixture in Which Water:Benzyl Alcohol = 50:50 (Weight Ratio)

The mixture (A2) was added to a liquid mixture in which the weight ratio of water to benzyl alcohol is 50:50 and which is a water-containing liquid mixture containing benzyl alcohol in an amount exceeding its saturation solubility so that the content of the mixture (A2) would be 5 wt%. The resulting mixture was stirred at 25°C for one minute and was then left to stand still.
A sorting status during the stirring and a sorting status during the standing were examined. Table 3 shows the results.

[Example 10]: Mixture (A3) and Liquid Mixture in Which Water:Benzyl Alcohol = 50:50 (Weight Ratio)

The mixture (A3) was added to a liquid mixture in which the weight ratio of water to benzyl alcohol is 50:50 and which is a water-containing liquid mixture containing benzyl alcohol in an amount exceeding its saturation solubility so that the content of the mixture (A3) would be 5 wt%. The resulting mixture was stirred at 25°C for one minute and was then left to stand still.
A sorting status during the stirring and a sorting status during the standing were examined. Table 3 shows the results.

[Example 11]: Mixture (A1) and Liquid Mixture in Which Water:Chloroform = 50:50 (Weight Ratio)

The mixture (A1) was added to a liquid mixture in which the weight ratio of water to chloroform is 50:50 and which is a water-containing liquid mixture containing chloroform in an amount exceeding its saturation solubility so that the content of the mixture (A1) would be 5 wt%. The resulting mixture was stirred at 25°C for one minute and was then left to stand still.

A sorting status during the stirring and a sorting status during the standing were examined. Table 3 shows the results.

[Example 12]: Mixture (A2) and Liquid Mixture in Which Water:Chloroform = 50:50 (Weight Ratio)

The mixture (A2) was added to a liquid mixture in which the weight ratio of water to chloroform is 50:50 and which is a water-containing liquid mixture containing chloroform in an amount exceeding its saturation solubility so that the content of the mixture (A2) would be 5 wt%. The resulting mixture was stirred at 25°C for one minute and was then left to stand still.

A sorting status during the stirring and a sorting status during the standing were examined. Table 3 shows the results.

[Example 13]: Mixture (A3) and Liquid Mixture in Which Water:Chloroform = 50:50 (Weight Ratio)

The mixture (A3) was added to a liquid mixture in which the weight ratio of water to chloroform is 50:50 and which is a water-containing liquid mixture containing chloroform in an amount exceeding its saturation solubility so that the content of the mixture (A3) would be 5 wt%. The resulting mixture was stirred at 25°C for one minute and was then left to stand still.

A sorting status during the stirring and a sorting status during the standing were examined. Table 3 shows the results.

[Example 14]: Mixture (A4) and Liquid Mixture in Which Water:Chloroform = 50:50 (Weight Ratio)

The mixture (A4) was added to a liquid mixture in which the weight ratio of water to chloroform is 50:50 and which is a water-containing liquid mixture containing chloroform in an amount exceeding its saturation solubility so that the content of the mixture (A4) would be 5 wt%. The resulting mixture was stirred at 25°C for one minute and was then left to stand still.

A sorting status during the stirring and a sorting status during the standing were examined. Table 3 shows the results.

[Example 15]: Mixture (A1) and Liquid Mixture in Which Water:Carbon Tetrachloride = 50:50 (Weight Ratio)

The mixture (A1) was added to a liquid mixture in which the weight ratio of water to carbon tetrachloride is 50:50 and which is a water-containing liquid mixture containing carbon tetrachloride in an amount exceeding its saturation solubility so that the content of the mixture (A1) would be 5 wt%. The resulting mixture was stirred at 25°C for one minute and was then left to stand still.

A sorting status during the stirring and a sorting status during the standing were examined. Table 4 shows the results.

[Example 16]: Mixture (A2) and Liquid Mixture in Which Water:Carbon Tetrachloride = 50:50 (Weight Ratio)

The mixture (A2) was added to a liquid mixture in which the weight ratio of water to carbon tetrachloride is 50:50 and which is a water-containing liquid mixture containing carbon tetrachloride in an amount exceeding its saturation solubility so that the content of the mixture (A2) would be 5 wt%. The resulting mixture was stirred at 25°C for one minute and was then left to stand still.

A sorting status during the stirring and a sorting status during the standing were examined. Table 4 shows the results.

[Example 17]: Mixture (A3) and Liquid Mixture in Which Water:Carbon tetrachloride = 50:50 (Weight Ratio)

The mixture (A3) was added to a liquid mixture in which the weight ratio of water to carbon tetrachloride is 50:50 and which is a water-containing liquid mixture containing carbon tetrachloride in an amount exceeding its saturation solubility so that the content of the mixture (A3) would be 5 wt%. The resulting mixture was stirred at 25°C for one minute and was then left to stand still.

A sorting status during the stirring and a sorting status during the standing were examined. Table 4 shows the results.

[Example 18]: Mixture (A4) and Liquid Mixture in Which Water:Carbon tetrachloride = 50:50 (Weight Ratio)

The mixture (A4) was added to a liquid mixture in which the weight ratio of water to carbon tetrachloride is 50:50 and which is a water-containing liquid mixture containing carbon tetrachloride in an amount exceeding its saturation solubility so that the content of the mixture (A4) would be 5 wt%. The resulting mixture was stirred at 25°C for one minute and was then left to stand still.
A sorting status during the stirring and a sorting status during the standing were examined. Table 4 shows the results.

[Comparative Example 1]

The mixture (A1) was added to water so that the content of the mixture (A1) would be 5 wt%, and the resulting mixture was stirred at 25°C for one minute and was then left to stand still.
A sorting status during the stirring and a sorting status during the standing were examined.
In each case, the pressure-sensitive adhesive and the substrate sank in an entangled state.
Table 4 shows the results.

[Comparative Example 2]

The mixture (A2) was added to water so that the content of the mixture (A2) would be 5 wt%, and the resulting mixture was stirred at 25°C for one minute and was then left to stand still.
A sorting status during the stirring and a sorting status during the standing were examined.
In each case, the pressure-sensitive adhesive and the substrate sank in an entangled state.
Table 4 shows the results.

[Table 2]

| | | | Example 1 | | Example 2 | | Example 3 | | Example 4 | |
|---|---|---|---|---|---|---|---|---|---|---|
| | Operation | | (i) | | (i) | | (ii) | | (ii) | |
| Liquid used for sorting | Water | | Water | | Water | | Water | | Water | |
| | [wt%] | | 92 | | 92 | | 90 | | 90 | |
| | First organic solvent | | 1-Butanol | | 1-Butanol | | - | | - | |
| | [wt%] | | 8 | | 8 | | - | | - | |
| | Second or third organic solvent | | - | | - | | 1-Butanol | | 1-Butanol | |
| | [wt%] | | - | | - | | 10 | | 10 | |
| Stirring state or standing state | | | Stirring | Standing | Stirring | Standing | Stirring | Standing | Stirring | Standing |
| Pressure-sensitive adhesive tape No.3195MS | Pressure-sensitive adhesive | Acrylic pressure-sensitive adhesive | Float to surface | Float to surface | - | - | Float to surface | Float to surface | - | - |
| | Substrate | PET substrate | Sink | Sink | - | - | Sink | Sink | - | - |
| Pressure-sensitive adhesive tape RP207 | Pressure-sensitive adhesive | Acrylic pressure-sensitive adhesive | - | - | Float to surface | Float to surface | - | - | Float to surface | Float to surface |
| | Substrate | PET substrate | - | - | Sink | Sink | - | - | Sink | Sink |
| Substrate | | Olefin substrate | - | - | - | - | - | - | - | - |

[Table 2] Continued

| | | | Example 5 | | Example 6 | | Example 7 | | Example 8 | |
|---|---|---|---|---|---|---|---|---|---|---|
| Operation | | | (ii) | | (ii) | | (ii) | | (ii) | |
| Liquid used for sorting | Water | | Water | | Water | | Water | | Water | |
| | [wt%] | | 90 | | 90 | | 90 | | 90 | |
| | First organic solvent | | - | | - | | - | | - | |
| | [wt%] | | - | | - | | - | | - | |
| | Second or third organic solvent | | Toluene | | Toluene | | Ethyl acetate | | Ethyl acetate | |
| | [wt%] | | 10 | | 10 | | 10 | | 10 | |
| Stirring state or standing state | | | Stirring | Standing | Stirring | Standing | Stirring | Standing | Stirring | Standing |
| Pressure-sensitive adhesive tape No.3195MS | Pressure-sensitive adhesive | Acrylic pressure-sensitive adhesive | Float to surface | Float to surface | - | - | Float to surface | Float to surface | - | - |
| | Substrate | PET substrate | Sink | Sink | - | - | Sink | Sink | - | - |
| Pressure-sensitive adhesive tape RP207 | Pressure-sensitive adhesive | Acrylic pressure-sensitive adhesive | - | - | Float to surface | Float to surface | - | - | Float to surface | Float to surface |
| | Substrate | PET substrate | - | - | Sink | Sink | - | - | Sink | Sink |
| Substrate | | Olefin substrate | - | - | - | - | - | - | - | - |

[Table 3]

| | | | Example 9 | | Example 10 | | Example 11 | |
|---|---|---|---|---|---|---|---|---|
| Operation | | | (ii) | | (ii) | | (ii) | |
| Liquid used for sorting | Water | | Water | | Water | | Water | |
| | [wt%] | | 50 | | 50 | | 50 | |
| | First organic solvent | | - | | - | | - | |
| | [wt%] | | - | | - | | - | |
| | Second or third organic solvent | | Benzyl alcohol | | Benzyl alcohol | | Chloroform | |
| | [wt%] | | 50 | | 50 | | 50 | |
| Stirring state or standing state | | | Stirring | Standing | Stirring | Standing | Stirring | Standing |
| Pressure-sensitive adhesive tape No.3195MS | Pressure-sensitive adhesive | Acrylic pressure-sensitive adhesive | - | - | Sink | Sink | Sink | Interface |
| | Substrate | PET substrate | - | - | - | - | Float to surface | Interface |
| Pressure-sensitive adhesive tape RP207 | Pressure-sensitive adhesive | Acrylic pressure-sensitive adhesive | Float to surface | Float to surface | - | - | - | - |
| | Substrate | PET substrate | Sink | Sink | - | - | - | - |
| Substrate | | Olefin substrate | - | - | Float to surface | Float to surface | - | - |

[Table 3] Continued

| | | | Example 12 | | Example 13 | | Example 14 | |
|---|---|---|---|---|---|---|---|---|
| Operation | | | (ii) | | (ii) | | (ii) | |
| Liquid used for sorting | Water | | Water | | Water | | Water | |
| | [wt%] | | 50 | | 50 | | 50 | |
| | First organic solvent | | - | | - | | - | |
| | [wt%] | | - | | - | | - | |
| | Second or third organic solvent | | Chloroform | | Chloroform | | Chloroform | |
| | [wt%] | | 50 | | 50 | | 50 | |
| Stirring state or standing state | | | Stirring | Standing | Stirring | Standing | Stirring | Standing |
| Pressure-sensitive adhesive tape No.3195MS | Pressure-sensitive adhesive | Acrylic pressure-sensitive adhesive | - | - | Sink | Interface | - | - |
| | Substrate | PET substrate | - | - | - | - | - | - |

(continued)

| | | | Example 12 | | Example 13 | | Example 14 | |
|---|---|---|---|---|---|---|---|---|
| | Operation | | (ii) | | (ii) | | (ii) | |
| Pressure-sensitive adhesive tape RP207 | Pressure-sensitive adhesive | Acrylic pressure-sensitive adhesive | Sink | Interface | - | - | Sink | Interface |
| | Substrate | PET substrate | Float to surface | Interface | - | - | - | - |
| Substrate | | Olefin substrate | - | - | Float to surface | Float to surface | Float to surface | Float to surface |

[Table 4]

| | | | Example 15 | | Example 16 | | Example 17 | |
|---|---|---|---|---|---|---|---|---|
| | Operation | | (ii) | | (ii) | | (ii) | |
| Liquid used for sorting | Water | | Water | | Water | | Water | |
| | [wt%] | | 50 | | 50 | | 50 | |
| | First organic solvent | | - | | - | | - | |
| | [wt%] | | - | | - | | - | |
| | Second or third organic solvent | | Carbon tetrachloride | | Carbon tetrachloride | | Carbon tetrachloride | |
| | [wt%] | | 50 | | 50 | | 50 | |
| Stirring state or standing state | | | Stirring | Standing | Stirring | Standing | Stirring | Standing |
| Pressure-sensitive adhesive tape No.3195MS | Pressure-sensitive adhesive | Acrylic pressure-sensitive adhesive | Sink | Interface | - | - | Sink | Interface |
| | Substrate | PET substrate | Float to surface | Interface | - | - | - | - |
| Pressure-sensitive adhesive tape RP207 | Pressure-sensitive adhesive | Acrylic pressure-sensitive adhesive | - | - | Sink | Interface | - | - |
| | Substrate | PET substrate | - | - | Float to surface | Interface | - | - |
| Substrate | | Olefin substrate | - | - | - | - | Float to surface | Float to surface |

[Table 4] Continued

| | | | Example 18 | | Comparative Example 1 | | Comparative Example 2 | |
|---|---|---|---|---|---|---|---|---|
| Operation | | | (ii) | | - | | - | |
| Liquid used for sorting | Water | | Water | | Water | | Water | |
| | [wt%] | | 50 | | 100 | | 100 | |
| | First organic solvent | | - | | - | | - | |
| | [wt%] | | - | | - | | - | |
| | Second or third organic solvent | | Carbon tetrachloride | | | | | |
| | [wt%] | | 50 | | - | | - | |
| Stirring state or standing state | | | Stirring | Standing | Stirring | Standing | Stirring | Standing |
| Pressure-sensitive adhesive tape No.3195MS | Pressure-sensitive adhesive | Acrylic pressure-sensitive adhesive | - | - | Sink | Sink | - | - |
| | Substrate | PET substrate | - | - | Sink | Sink | - | - |
| Pressure-sensitive adhesive tape RP207 | Pressure-sensitive adhesive | Acrylic pressure-sensitive adhesive | Sink | Interface | - | - | Sink | Sink |
| | Substrate | PET substrate | - | - | - | - | Sink | Sink |
| Substrate | | Olefin substrate | Float to surface | Float to surface | | | | |

It can be understood from Examples 1 and 2 that operation (i) (the operation of stirring the mixture (A1) or (A2) in the saturated aqueous solution of the first organic solvent) on the mixture (A1) or (A2) including the pressure-sensitive adhesive, the substrate, and the first organic solvent allowed the pressure-sensitive adhesive to float to the surface and the substrate to sink using the difference in specific gravity and that the pressure-sensitive adhesive and the substrate were able to be sorted.

It can be understood from Examples 3 to 8 that operation (ii) (the operation of stirring the mixture (A1) or (A2) in the water-containing liquid mixture containing at least one selected from the group consisting of the second organic solvent and the third organic solvent in an amount exceeding its saturation solubility) on the mixture (A1) or (A2) including the pressure-sensitive adhesive, the substrate, and the first organic solvent allowed the pressure-sensitive adhesive to float to the surface and the substrate to sink using the difference in specific gravity and that the pressure-sensitive adhesive and the substrate were able to be sorted.

It can be understood from Examples 9 and 10 that operation (ii) (the operation of stirring the mixture (A2) or (A3) in the water-containing liquid mixture containing at least one selected from the group consisting of the second organic solvent and the third organic solvent in an amount exceeding its saturation solubility) on the mixture (A2) or (A3) including the pressure-sensitive adhesive, the substrate, and the first organic solvent allowed the pressure-sensitive adhesive to float to the surface and the substrate to sink in Example 9 and allowed the pressure-sensitive adhesive to sink and the substrate to float to the surface in Example 10 using the difference in specific gravity and that the pressure-sensitive adhesive and the substrate were able to be sorted.

It can be understood from Examples 11 to 18 that operation (ii) (the operation of stirring any one of the mixtures (A1) to (A4) in the water-containing liquid mixture containing at least one selected from the group consisting of the second organic solvent and the third organic solvent in an amount exceeding its saturation solubility) on any one of the mixtures (A1) to (A4) including the pressure-sensitive adhesive, the substrate, and the first organic solvent allowed the pressure-sensitive adhesive to sink and the substrate to float to the surface in a stirred state using the difference in specific gravity and that the pressure-sensitive adhesive and the substrate were able to be sorted. While at least one of the pressure-sensitive adhesive and the substrate floated near the interface in a standing state and that made sorting difficult, sorting was able to be achieved as described above in a stirred state.

According to Comparative Examples 1 and 2, in each state, the pressure-sensitive adhesive and the substrate sank in an entangled state, and were unable to be sorted. This is presumably because the first organic solvent impregnated in the first organic solvent-impregnated pressure-sensitive adhesive included in the mixture (A1) or (A2) leached out, the pressure-sensitive adhesive agglomerated, and readhesion thereof to the substrate happened.

[Example 19]: Replacing Mixture (A1) by Toluene

An amount of 100 g of the mixture (A1) and 500 g of toluene were added into a 1 L beaker, and were left to stand still for one minute or longer so as to immerse the mixture (A1) in the toluene. After that, a mixture (B19) obtained by the immersion was recovered. Then, the mixture (B19) was added to water so that the content of the mixture (B19) would be 5 wt%, and the resulting mixture was stirred at 25°C for one minute and was then left to stand still.

A sorting status during the stirring and a sorting status during the standing were examined. Table 5 shows the results.

[Example 20]: Replacing Mixture (A2) by Toluene

An amount of 100 g of the mixture (A2) and 500 g of toluene were added into a 1 L beaker, and were left to stand still for one minute or longer so as to immerse the mixture (A2) in the toluene. After that, a mixture (B20) obtained by the immersion was recovered. Then, the mixture (B20) was added to water so that the content of the mixture (B20) would be 5 wt%, and the resulting mixture was stirred at 25°C for one minute and was then left to stand still.

A sorting status during the stirring and a sorting status during the standing were examined. Table 5 shows the results.

[Example 21]: Replacing Mixture (A2) by Benzyl Alcohol

An amount of 100 g of the mixture (A2) and 500 g of benzyl alcohol were added into a 1 L beaker, and were left to stand still for one minute or longer so as to immerse the mixture (A2) in the benzyl alcohol. After that, a mixture (B21) obtained by the immersion was recovered. Then, the mixture (B21) was added to water so that the content of the mixture (B21) would be 5 wt%, and the resulting mixture was stirred at 25°C for one minute and was then left to stand still.

A sorting status during the stirring and a sorting status during the standing were examined. Table 5 shows the results.

[Example 22]: Replacing Mixture (A3) by Benzyl Alcohol

An amount of 100 g of the mixture (A3) and 500 g of benzyl alcohol were added into a 1 L beaker, and were left to stand still for one minute or longer so as to immerse the mixture (A3) in the benzyl alcohol. After that, a mixture (B22) obtained by the immersion was recovered. Then, the mixture (B22) was added to water so that the content of the mixture (B22) would be 5 wt%, and the resulting mixture was stirred at 25°C for one minute and was then left to stand still.

A sorting status during the stirring and a sorting status during the standing were examined. Table 5 shows the results.

[Example 23]: Replacing Mixture (A3) by Nitrobenzene

An amount of 100 g of the mixture (A3) and 500 g of nitrobenzene were added into a 1 L beaker, and were left to stand still for one minute or longer so as to immerse the mixture (A3) in the nitrobenzene. After that, a mixture (B23) obtained by the immersion was recovered. Then, the mixture (B23) was added to water so that the content of the mixture (B23) would be 5 wt%, and the resulting mixture was stirred at 25°C for one minute and was then left to stand still.

A sorting status during the stirring and a sorting status during the standing were examined. Table 5 shows the results.

[Example 24]: Replacing Mixture (A4) by Nitrobenzene

An amount of 100 g of the mixture (A4) and 500 g of nitrobenzene were added into a 1 L beaker, and were left to stand still for one minute or longer so as to immerse the mixture (A4) in the nitrobenzene. After that, a mixture (B24) obtained by the immersion was recovered. Then, the mixture (B24) was added to water so that the content of the mixture (B24) would be 5 wt%, and the resulting mixture was stirred at 25°C for one minute and was then left to stand still.

A sorting status during the stirring and a sorting status during the standing were examined. Table 5 shows the results.

[Example 25]: Replacing Mixture (A3) by Chloroform

An amount of 100 g of the mixture (A3) and 500 g of chloroform were added into a 1 L beaker, and were left to stand still for one minute or longer so as to immerse the mixture (A3) in the chloroform. After that, a mixture (B25) obtained by the immersion was recovered. Then, the mixture (B25) was added to water so that the content of the mixture (B25) would be 5 wt%, and the resulting mixture was stirred at 25°C for one minute and was then left to stand still.
A sorting status during the stirring and a sorting status during the standing were examined. Table 6 shows the results.

[Example 26]: Replacing Mixture (A4) by Chloroform

An amount of 100 g of the mixture (A4) and 500 g of chloroform were added into a 1 L beaker, and were left to stand still for one minute or longer so as to immerse the mixture (A4) in the chloroform. After that, a mixture (B26) obtained by the immersion was recovered. Then, the mixture (B26) was added to water so that the content of the mixture (B26) would be 5 wt%, and the resulting mixture was stirred at 25°C for one minute and was then left to stand still.
A sorting status during the stirring and a sorting status during the standing were examined. Table 6 shows the results.

[Example 27]: Replacing Mixture (A3) by Carbon Tetrachloride

An amount of 100 g of the mixture (A3) and 500 g of carbon tetrachloride were added into a 1 L beaker, and were left to stand still for one minute or longer so as to immerse the mixture (A3) in the carbon tetrachloride. After that, a mixture (B27) obtained by the immersion was recovered. Then, the mixture (B27) was added to water so that the content of the mixture (B27) would be 5 wt%, and the resulting mixture was stirred at 25°C for one minute and was then left to stand still.
A sorting status during the stirring and a sorting status during the standing were examined. Table 6 shows the results.

[Example 28]: Replacing Mixture (A4) by Carbon Tetrachloride

An amount of 100 g of the mixture (A4) and 500 g of carbon tetrachloride were added into a 1 L beaker, and were left to stand still for one minute or longer so as to immerse the mixture (A4) in the carbon tetrachloride. After that, a mixture (B28) obtained by the immersion was recovered. Then, the mixture (B28) was added to water so that the content of the mixture (B28) would be 5 wt%, and the resulting mixture was stirred at 25°C for one minute and was then left to stand still.
A sorting status during the stirring and a sorting status during the standing were examined. Table 6 shows the results.

[Table 5]

| | | | Example 19 | | Example 20 | | Example 21 | |
|---|---|---|---|---|---|---|---|---|
| Operation | | | (iii) | | (iii) | | (iii) | |
| Liquid used for sorting | Third organic solvent | | Toluene | | Toluene | | Benzyl alcohol | |
| Stirring state or standing state | | | Stirring | Standing | Stirring | Standing | Stirring | Standing |
| Pressure-sensitive adhesive tape No.3195MS | Pressure-sensitive adhesive | Acrylic pressure-sensitive adhesive | Float to surface | Float to surface | - | - | - | - |
| | Substrate | PET substrate | Sink | Sink | - | - | - | - |

(continued)

|  |  |  | Example 19 | | Example 20 | | Example 21 | |
|---|---|---|---|---|---|---|---|---|
| Operation | | | (iii) | | (iii) | | (iii) | |
| Pressure-sensitive adhesive tape RP207 | Pressure-sensitive adhesive | Acrylic pressure-sensitive adhesive | - | - | Float to surface | Float to surface | Float to surface | Float to surface |
| | Substrate | PET substrate | - | - | Sink | Sink | Sink | Sink |
| Substrate | | Olefin substrate | - | - | - | - | - | - |

[Table 5] Continued

|  |  |  | Example 22 | | Example 23 | | Example 24 | |
|---|---|---|---|---|---|---|---|---|
| Operation | | | (iii) | | (iii) | | (iii) | |
| Liquid used for sorting | Third organic solvent | | Benzyl alcohol | | Nitrobenzene | | Nitrobenzene | |
| Stirring state or standing state | | | Stirring | Standing | Stirring | Standing | Stirring | Standing |
| Pressure-sensitive adhesive tape No.3195MS | Pressure-sensitive adhesive | Acrylic pressure-sensitive adhesive | Sink | Sink | Sink | Sink | - | - |
| | Substrate | PET substrate | - | - | - | - | - | - |
| Pressure-sensitive adhesive tape RP207 | Pressure-sensitive adhesive | Acrylic pressure-sensitive adhesive | - | - | - | - | Sink | Sink |
| | Substrate | PET substrate | - | - | - | - | - | - |
| Substrate | | Olefin substrate | Float to surface | Float to surface | Float to surface | Float to surface | Float to surface | Float to surface |

[Table 6]

| | | | Example 25 | | Example 26 | | Example 27 | | Example 28 | |
|---|---|---|---|---|---|---|---|---|---|---|
| Operation | | | (iii) | | (iii) | | (iii) | | (iii) | |
| Liquid used for sorting | Third organic solvent | | Chloroform | | Chloroform | | Carbon tetrachloride | | Carbon tetrachloride | |
| Stirring state or standing state | | | Stirring | Standing | Stirring | Standing | Stirring | Standing | Stirring | Standing |
| Pressure-sensitive adhesive tape No.3195MS | Pressure-sensitive adhesive | Acrylic pressure-sensitive adhesive | Sink | Sink | - | - | Sink | Sink | - | - |
| | Substrate | PET substrate | - | - | - | - | - | - | - | - |
| Pressure-sensitive adhesive tape RP207 | Pressure-sensitive adhesive | Acrylic pressure-sensitive adhesive | - | - | Sink | Sink | - | - | Sink | Sink |
| | Substrate | PET substrate | - | - | - | - | - | - | - | - |
| Substrate | | Olefin substrate | Float to surface | Float to surface | Float to surface | Float to surface | Float to surface | Float to surface | Float to surface | Float to surface |

It can be understood from Examples 19 and 20 that operation (iii) (the operation of, after immersion of the mixture (A1) or (A2) in the third organic solvent, recovering the mixture (B19) or (B20) obtained by the immersion and stirring the mixture (B19) or (B20) in water) on the mixture (A1) or (A2) including the pressure-sensitive adhesive, the substrate, and the first organic solvent allowed the pressure-sensitive adhesive to float to the surface and the substrate to sink in a stirred state using the difference in specific gravity and that the pressure-sensitive adhesive and the substrate were able to be sorted.

It can be understood from Examples 21 and 22 that operation (iii) (the operation of, after immersion of the mixture (A2) or (A3) in the third organic solvent, recovering the mixture (B21) or (B22) obtained by the immersion and stirring the mixture (B21) or (B22) in water) on the mixture (A2) or (A3) including the pressure-sensitive adhesive, the substrate, and the first organic solvent allowed the pressure-sensitive adhesive to float to the surface and the substrate to sink in Example 21 and allowed the pressure-sensitive adhesive to sink and the substrate to float to the surface in Example 22 in a stirred state using the difference in specific gravity and that the pressure-sensitive adhesive and the substrate were able to be sorted.

It can be understood from Examples 23 to 28 that operation (iii) (the operation of, after immersion of the mixture (A3) or (A4) in the third organic solvent, recovering any one of the mixtures (B23) to (B28) obtained by the immersion and stirring the one of the mixture (B23) to (B28) in water) on the mixture (A3) or (A4) including the pressure-sensitive adhesive, the substrate, and the first organic solvent allowed the pressure-sensitive adhesive to sink and the substrate to float to the surface in a stirred state using the difference in specific gravity and that the pressure-sensitive adhesive and the substrate were able to be sorted.

INDUSTRIAL APPLICABILITY

The method according to the embodiment of the present invention for sorting a pressure-sensitive adhesive and a substrate can be effectively used for, for example, reclamation of a large amount of waste of pressure-sensitive adhesive tape produced, for example, at sites where electrical parts or optical parts are manufactured.

**Claims**

1. A method for sorting, from a mixture (A) including a pressure-sensitive adhesive, a substrate, and a first organic solvent, the pressure-sensitive adhesive and the substrate, wherein
at least one operation selected from the group consisting of (i), (ii), and (iii) below is performed:

   (i) an operation of stirring the mixture (A) in a saturated aqueous solution of the first organic solvent;
   (ii) an operation of stirring the mixture (A) in a water-containing liquid mixture containing at least one selected from the group consisting of a second organic solvent and a third organic solvent in an amount exceeding a saturation solubility thereof; and
   (iii) an operation of, after immersion of the mixture (A) in the third organic solvent, recovering a mixture (B) obtained by the immersion and stirring the mixture (B) in water.

2. The sorting method according to claim 1, wherein the first organic solvent is an organic solvent having an HSP value of 10 to 45.

3. The sorting method according to claim 1, wherein the second organic solvent is an organic solvent having an HSP value of 10 to 45 and a solubility in water of more than 10 g/L and 500 g/L or less at 20°C.

4. The sorting method according to claim 1, wherein the third organic solvent is an organic solvent having an HSP value of 10 to 45 and a solubility in water of 10 g/L or less at 20°C.

5. The sorting method according to claim 1, wherein the stirring is followed by standing.

6. The sorting method according to claim 1, wherein the pressure-sensitive adhesive is a pressure-sensitive adhesive included in a pressure-sensitive adhesive tape.

7. The sorting method according to claim 1, wherein the substrate is a substrate included in a pressure-sensitive adhesive tape.

## INTERNATIONAL SEARCH REPORT

| International application No. |
|---|
| **PCT/JP2024/029719** |

**A. CLASSIFICATION OF SUBJECT MATTER**

***B29B 17/00***(2006.01)i
FI: B29B17/00 ZAB

According to International Patent Classification (IPC) or to both national classification and IPC

**B. FIELDS SEARCHED**

Minimum documentation searched (classification system followed by classification symbols)

B29B17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2023-105258 A (NITTO DENKO CORPORATION) 28 July 2023 (2023-07-28) particularly, paragraphs [0033]-[0072] | 1-7 |
| A | WO 2022/004609 A1 (NITTO DENKO CORPORATION) 06 January 2022 (2022-01-06) | 1-7 |
| A | WO 2022/210216 A1 (NITTO DENKO CORPORATION) 06 October 2022 (2022-10-06) | 1-7 |

☐ Further documents are listed in the continuation of Box C.　　☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 September 2024** | **29 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/029719**

| Patent document cited in search report | | | Publication date (day/month/year) | Patent family member(s) | | | Publication date (day/month/year) |
|---|---|---|---|---|---|---|---|
| JP | 2023-105258 | A | 28 July 2023 | EP | 004174123 | A1 | |
| | | | | particularly, paragraphs [0033]-[0072] | | | |
| WO | 2022/004609 | A1 | 06 January 2022 | EP | 004174123 | A1 | |
| WO | 2022/210216 | A1 | 06 October 2022 | EP | 004316732 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021175796 A